# EUROPEAN PATENT SPECIFICATION

(11) **EP 1 449 735 B1**
(45) Date of publication and mention of the grant of the patent: **27.09.2006**
(21) Application number: 04000046.5
(22) Date of filing: 05.01.2004
(51) Int. Cl.: B60V 1/14

(54) **Support, steering and propulsion device for air cushion vehicles**
Vorrichtung zur Auftriebserzeugung, Steuerung und Vortrieb von Luftkissenfahrzeugen
Dispositif pour soulever, diriger et propulser des véhicules à coussin d'air

(30) Priority: 24.02.2003 IT MI20030323
(43) Date of publication of application: 25.08.2004
(73) Proprietor: HI TECH INTERNATIONAL S.R.L., 20064 Gorgonzola (Milano) (IT)
(72) Inventor: Passoni, Carlo Guido, 20064 Gorgonzola (Milano) (IT); Passoni, Matteo, 20064 Gorgonzola (Milano) (IT)
(74) Representative: Luksch, Giorgio

(56) References cited:
- US-A- 4 848 501
- US-A- 5 007 495
- US-A- 5 096 012

## Description

The present invention relates to a support, steering and propulsion device for air cushion vehicles, usually known as hovercrafts, in accordance with the introduction to the first claim.

Air cushion vehicles are much used for conveying persons and articles under rough conditions. The main characteristic of said air cushion vehicles is their ability to travel under any conditions on water or land without any distinction or impediment. Said characteristic, which makes them very versatile, is obtained by a vehicle-supporting air cushion which separates it completely from the surface on which it travels, whether this be over ground, marshland, water, a river etc. Said amphibious vehicle consequently has no type of contact with the surface over which it travels, other than the grazing of the surface by a part of the devices used to form the skirt.

Support, steering and propulsion devices for air cushion vehicles are usual in the state of the art. In general for supporting the vehicle a first fan of usually vertical axis of rotation is used to feed a large air flow into the lower part of the vehicle. Said fan is usually driven by a motor. The suitably shaped skirt, generally of rubber material, extends along the outer perimeter of the vehicle to trap the air flow generated by the fan, to hence create below the vehicle a zone of pressure greater than atmospheric; the pressure difference generates the vehicle support.

The vehicle is usually propelled by a second fan of generally horizontal axis of rotation, usually fixed to the stern end of the hull. Said fan can be of the variable blade incidence type, to be able to regulate the thrust and direction of said thrust without reversing the direction of rotation of the fan. The forward or rearward direction of the vehicle movement is set by varying the angle of incidence of said blades, to generate a thrust of variable intensity and sense for the same rotational shaft speed.

The vehicle is generally steered by movable flow deviators positioned such as to intercept the flow generated by the propulsion fan and able to modify the direction but not the sense, in such a manner as to enable the vehicle to be steered.

This construction does not however allow sufficiently small radii of curvature, and moreover comprises two turbofans, one for support and the other for propulsion and steering. In this case the radii of curvature remain substantially large even for low speeds; it is not possible to rotate the vehicle about its axis, when at rest.

Another form of propulsion and steering device comprises two independent fans of fixed blade incidence angle, positioned at the stern end of the vehicle and rotating about an axis perpendicular to the fan rotation direction, such as to enable the flow generated by the two fans to be orientated.

This solution adds mobility and agility to the air cushion vehicle, but comprises at least three turbofans, hence increasing its weight, constructional difficulty and cost.

As is apparent from the aforegoing analysis, known air cushion vehicles use at least two fans, at least one assigned to supporting the vehicle, and at least a second assigned to its propulsion and steering. This configuration does not enable particularly agile and lightweight craft to be constructed.

Moreover, in both the aforesaid configurations there remains the problem of halting the vehicle; propulsion flow reversal is difficult and not immediate for either of the known solutions, and often the only way to brake sharply is to annul the flow supporting the vehicle, causing it to suddenly stop by abrupt contact with the surface on which it is moving; this procedure is evidently dangerous and undesirable, and is effective only if the air cushion vehicle is on a solid surface such as the ground.

US 4 848 501 (pre-characterising portion of claim 1) and US 5 007 495 disclose a device also arranged to halt the vehicle.

The object of the present invention is to provide a support, steering and propulsion device for air cushion vehicles which is improved over the prior art solutions.

A further object of the present invention is to provide a support, steering and propulsion device for air cushion vehicles which is of simple construction, reliable, economical and easy to use.

A further object is to provide a device in accordance with the aforesaid which requires only one fan for supporting, steering and propelling said vehicle, provides better agility for the vehicle and enables it to be easily halted.

This and further objects which will be more apparent from the ensuing detailed description are attained by a support, steering and propulsion device for air cushion vehicles in accordance with the accompanying claims.

The invention will be more apparent from the following detailed description of a preferred embodiment thereof given by way of non-limiting example and illustrated in the accompanying drawings, in which:
Figure 1 is a plan view of an air cushion vehicle in which a support, steering and propulsion device according to the present invention is installed;
Figure 2 is a rear view of the vehicle of Figure 1;

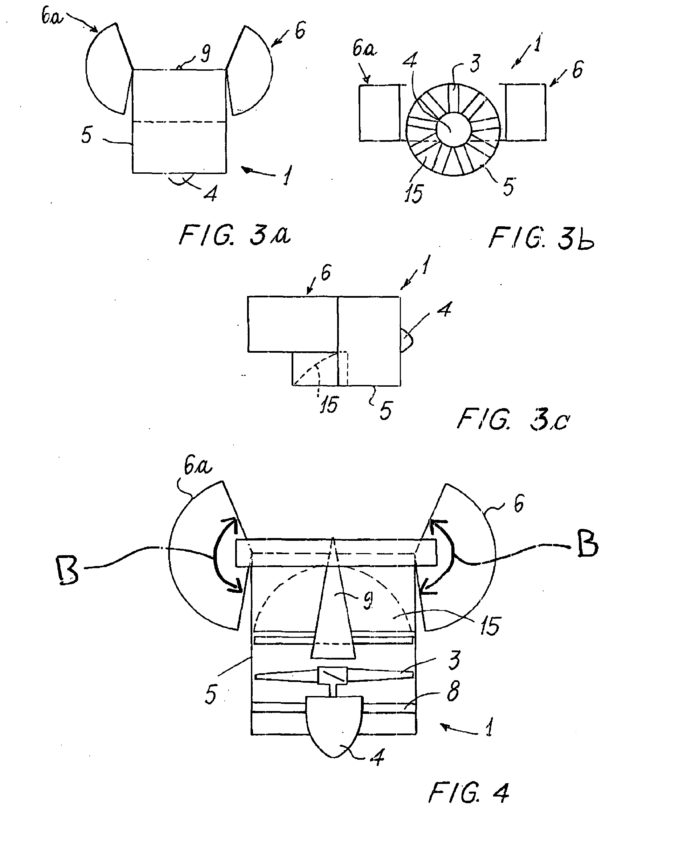

Figures 3a, 3b and 3c are respectively a plan view, front view and side view of the support, steering an propulsion device for air cushion vehicles of the present invention;
Figure 4 is a plan view showing the internal components of the device of Figure 3a;
Figure 5 is a perspective view of the device of the present invention.

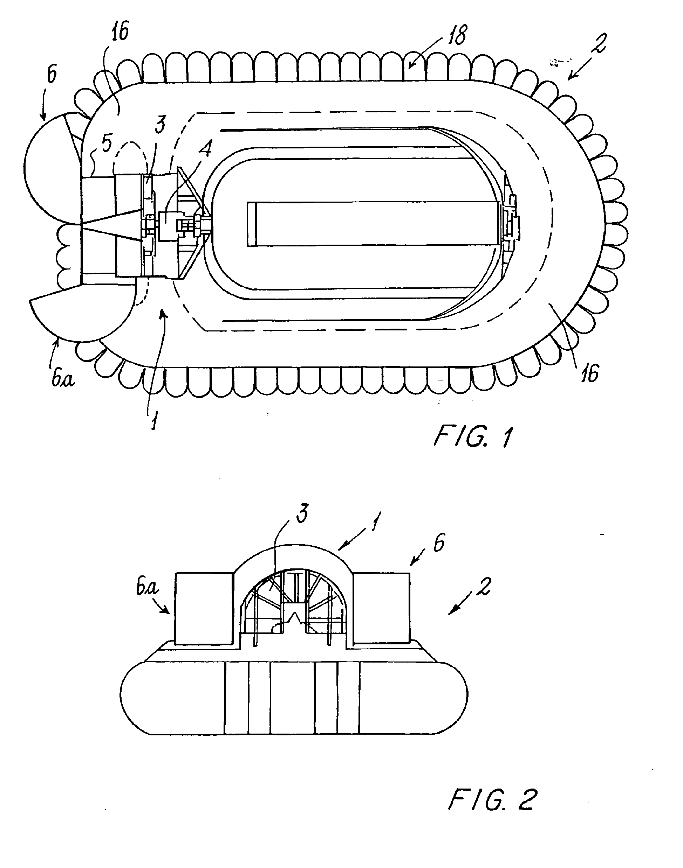

With reference to Figures from 1 to 5, a support, steering and propulsion device for air cushion vehicles according to the present invention is indicated overall by 1. With reference to Figures 1 and 2, the device of the present invention is installed on an air cushion vehicle indicated overall by 2; said support, steering and propulsion device 1 is fixed in a rear position, as shown in Figure 1, to the air cushion vehicle 2.

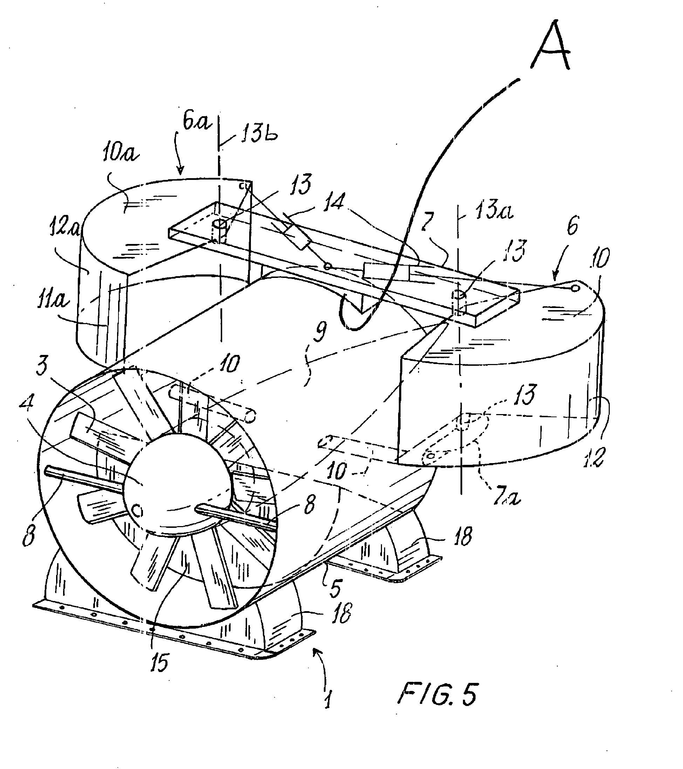

With particular reference to Figure 5, said support, steering and propulsion device 1 consists of a preferably cylindrical hollow casing 5, fixed to a frame of the vehicle 2 by suitable fixing means 18 which rigidly fix it to the vehicle 2. A fan 3 is positioned at least partly within the hollow cylindrical casing 5 which is arranged to convey the main flow of said fan 3, and is driven by a motor 4, the shaft of which is torsionally rigid with a shaft of said fan 3, said motor 4 being rigidly fixed to the hollow cylindrical casing 5 by suitable supports 8. An anti-turbulence means 9, shaped to prevent turbulence and to straighten the thrust flow generated by said fan 3, is immersed in the main flow of said fan 3 and is fixed to the hollow cylindrical casing 5 by support bars 10.

Downstream of the main flow of the fan 3 there are positioned two flow deviators 6, 6a in the form of portions of a hollow cylinder. Said flow deviators 6, 6a consist of support surfaces 10, 11, 10a, 11a, supporting the flow deflecting means 12, 12a, said flow deflecting means being maintained in a position approximately vertical to the main direction of the thrust flow generated by the fan 3. Suitable supports 7, 7a, rigid with the vehicle 2, support said flow deviators 6, 6a by means of hinge connections 13, enabling said flow deviators 6, 6a, manipulated by suitable actuators 14 connected to said flow deviators 6, 6a and to the vehicle 2, to be inserted into or removed from the main flow generated by the fan 3, to partly or totally deviate it.

The actuators 14 are operated independently of each other by the driver of the air cushion vehicle 2, by suitable controls disposed for example on a normal steering control unit. When the flow deviators are in a position such as not to intercept any part of the thrust flow generated by the fan 3, the maximum propulsion thrust is achieved and a force is generated which pushes the air cushion vehicle 2 in the opposite direction to the flow generated by the fan 3. In contrast, when the flow deviators are inclined by an equal angle into a position such as to intercept all or a large part of the thrust flow and to direct it, by virtue of their particular shape, in a direction virtually opposite the direction of the original flow, a force opposite to that in the preceding case is generated which causes the vehicle to proceed rearward or brakes it depending on its actual conditions prior to the manoeuvre.

Different angular positions of the flow deviators generate moments which can rotate the air cushion vehicle in any direction and with any radius of curvature; with particular angular positions of the flow deviator, the vehicle can even rotate about its axis practically from rest.

Downstream of the main flow generated by the fan 3 a flow conveying mouth 15 is provided which withdraws part of the propulsion flow generated by the fan 3 and distributes it, for supporting the vehicle, into an air conduit 16 positioned along the entire perimeter of the air cushion vehicle 2. Said air conduit 16 supplies the air required to inflate each independent sector 18 of the skirt surrounding the outer perimeter of the vehicle 2, to replenish said independent sectors 18 with air via suitable holes, hence creating an air cushion which supports the vehicle.

A preferred embodiment has been illustrated, however others can be devised using the same inventive concept.

## Claims

1. A support, steering and propulsion device (1) for air cushion vehicles commonly known as hovercrafts (2), comprising a propulsion fan (3) positioned at least partly within a hollow cylindrical casing (5) and two flow deviators (6, 6a) of cylindrical sector shape which, independently of each other and under the control of the vehicle driver, can intercept and deviate in a desired direction all or part of the air flow generated by said fan (3), the device also comprising a flow conveying mouth (15) which is in the interior of and protruding in said casing (5) and is arranged to withdraw part of the propulsion flow for supporting the vehicle, said casing (5) having fixing means arranged for rigidly fixing the casing to the vehicle, the device comprising a motor (4) activating the propulsion fan (3), said device carrying actuators (14) arranged to manipulate the deviators (6, 6a) and adapted for being connected to the vehicle; **characterized in that** said motor (4) is supported by and rigidly fixed to the casing by supports (8), moreover said deviators comprising a first support (7) arranged to connect said deviators both to each other and to the casing (5).

2. A support, steering and propulsion device (1) as claimed in claim 1, **characterised in that** the deviator (6, 6a) is of circular sector shape in plan view.

3. A support, steering and propulsion device (1) as claimed in claim 1, **characterised in that** said flow deviator (6, 6a) for intercepting or not intercepting the flow generated by the propulsion fan (3) rotates about its axis (13a, 13b).

4. A support, steering and propulsion device (1) as claimed in claim 3, **characterised in that** the flow deviator means (6, 6a) are specularly disposed and independently controlled.

5. A support, steering and propulsion device (1) as claimed in claim 1, **characterised in that** all or part of the flow generated by the propulsion fan (3) flows into a flow conveying conduit (5).

6. A support, steering and propulsion device (1) as claimed in claim 6, **characterised in that** at least one flow deviator (6, 6a) is positioned at the exit of the flow conveying conduit (5).

7. A support, steering and propulsion device (1) as claimed in one or more of the preceding claims, **characterised in that** said motor (4) is positioned at least partly within the hollow cylindrical casing (5).

8. A support, steering and propulsion device (1) as claimed in one or more of the preceding claims, **characterised by** comprising an anti-turbulence means (9) fixed to the inner of the hollow cylindrical casing (5) by support bars (10).

9. A support, steering and propulsion device (1) as claimed in one or more of the preceding claims, **characterised by** comprising second supports (7a) arranged to connect said deviators (6, 6a) to the vehicle (2).

## Patentansprüche

1. Vorrichtung zur Auftriebserzeugung, Steuerung und Vortrieb (1) für Luftkissenfahrzeuge, allgemein als Hovercrafts (2) bekannt, die ein Vortriebsgebläse (3), das zumindest teilweise in einem hohlen zylindrischen Gehäuse (5) positioniert ist, zwei Strömungsablenker (6, 6a) mit zylindrischer Schnittform, die unabhängig voneinander und unter der Kontrolle des Fahrzeugfahrers, den gesamten oder einen Teil des von dem Gebläse (3) erzeugten Luftstroms abfangen und in eine gewünschte Richtung umlenken können, umfasst, wobei die Vorrichtung auch eine Strömungsfördermündung (15) umfasst, die sich im Inneren des Gehäuses (5) befindet und in das Gehäuse vorragt und so angeordnet ist, dass sie einen Teil des Vortriebsstroms zur Auftriebserzeugung des Fahrzeugs abzieht, wobei das Gehäuse (5) Befestigungsmittel zum starren Befestigen des Gehäuses an dem Fahrzeug umfasst, wobei die Vorrichtung einen Motor (4) umfasst, der das Vortriebsgebläse (3) betätigt, wobei die Vorrichtung Stellglieder (14) trägt, die so angeordnet sind, dass sie die Ablenker (6, 6a) manipulieren und zur Verbindung mit dem Fahrzeug geeignet sind, **dadurch gekennzeichnet, dass** der Motor (4) von dem Gehäuse durch Träger (8) gestützt und daran starr befestigt ist und dass die Ablenker außerdem einen ersten Träger (7) umfassen, der so angeordnet ist, dass er die Ablenker sowohl miteinander als auch mit dem Gehäuse (5) verbindet.

2. Vorrichtung zur Auftriebserzeugung, Steuerung und Vortrieb (1) nach Anspruch 1, **dadurch gekennzeichnet, dass** der Ablenker (6, 6a) in Draufsicht eine kreisförmige Schnittform aufweist.

3. Vorrichtung zur Auftriebserzeugung, Steuerung und Vortrieb (1) nach Anspruch 1, **dadurch gekennzeichnet, dass** der Strömungsablenker (6, 6a) zum Abfangen oder nicht Abfangen des von dem Vortriebsgebläse (3) erzeugten Stroms sich um seine Achse (13a, 13b) dreht.

4. Vorrichtung zur Auftriebserzeugung, Steuerung und Vortrieb (1) nach Anspruch 3, **dadurch gekennzeichnet, dass** die Strömungsablenkermittel (6, 6a) einander spiegelnd angeordnet und unabhängig gesteuert sind.

5. Vorrichtung zur Auftriebserzeugung, Steuerung und Vortrieb (1) nach Anspruch 1, **dadurch gekennzeichnet, dass** der gesamte oder ein Teil des von dem Vortriebsgebläse (3) erzeugten Stroms in eine Strömungsförderleitung (5) fließt.

6. Vorrichtung zur Auftriebserzeugung, Steuerung und Vortrieb (1) nach Anspruch 6, **dadurch gekennzeichnet**, das mindestens ein Strömungsablenker (6, 6a) an dem Ausgang der Strömungsförderleitung (5) positioniert ist.

7. Vorrichtung zur Auftriebserzeugung, Steuerung und Vortrieb (1) nach einem oder mehreren der vorhergehenden Ansprüche, **dadurch gekennzeichnet, dass** der Motor (4) zumindest teilweise in dem hohlen zylindrischen Gehäuse (5) positioniert ist.

8. Vorrichtung zur Auftriebserzeugung, Steuerung und Vortrieb (1) nach einem oder mehreren der vorhergehenden Ansprüche, **dadurch gekennzeichnet, dass** sie ein Antiturbulenzen-Mittel (9) umfasst, das über Trägerbalken (10) im Inneren des hohlen zylindrischen Gehäuses (5) befestigt ist.

9. Vorrichtung zur Auftriebserzeugung, Steuerung und Vortrieb (1) nach einem oder mehreren der vorhergehenden Ansprüche, **dadurch gekennzeichnet, dass** sie zweite Träger (7a) umfasst, die so angeordnet sind, dass sie die Ablenker (6, 6a) mit dem Fahrzeug (2) verbinden.

## Revendications

1. Dispositif pour soulever, diriger et propulser (1) pour des véhicules à coussin d'air appelés couramment aéroglisseurs (2), comprenant une hélice de propulsion (3) placée au moins partiellement à l'intérieur d'un tambour cylindrique creux (5) et deux déviateurs de flux (6, 6a) ayant une forme de section cylindrique qui, indépendamment l'un de l'autre et sous le contrôle du conducteur du véhicule, peuvent intercepter et dévier dans une direction souhaitée la totalité ou une partie du flux d'air produit par ladite hélice (3), le dispositif comprenant également une embouchure de transport de flux (15) qui est à l'intérieur et en saillie dans ledit tambour (5) et qui est disposée pour prélever une partie du flux de propulsion afin de soutenir le véhicule, ledit tambour (5) ayant des moyens de fixation disposés pour fixer le tambour de façon rigide sur le véhicule, le dispositif comprenant un moteur (4) activant l'hélice de propulsion (3), ledit dispositif étant muni d'actionneurs (14) disposés pour manipuler les déviateurs (6, 6a) et conçus pour être reliés au véhicule, **caractérisé en ce que** ledit moteur (4) est soutenu par le tambour et fixé de façon rigide sur celui-ci par des supports (8), lesdits déviateurs comprenant en outre un premier support (7) disposé pour relier lesdits deux déviateurs l'un à l'autre et au tambour (5).

2. Dispositif pour soulever, diriger et propulser (1) selon la revendication 1, **caractérisé en ce que** le déviateur (6, 6a) a une forme de section circulaire dans une vue en plan.

3. Dispositif pour soulever, diriger et propulser (1) selon la revendication 1, **caractérisé en ce que** ledit déviateur de flux (6, 6a) permettant d'intercepter ou de ne pas intercepter le flux produit par l'hélice de propulsion (3) tourne autour de son axe (13a, 13b).

4. Dispositif pour soulever, diriger et propulser (1) selon la revendication 3, **caractérisé en ce que** les moyens de déviation de flux (6, 6a) sont disposés de façon spéculaire et contrôlés de façon indépendante.

5. Dispositif pour soulever, diriger et propulser (1) selon la revendication 1, **caractérisé en ce que** la totalité ou une partie du flux produit par l'hélice de propulsion (3) circule dans une conduite de transport de flux (5).

6. Dispositif pour soulever, diriger et propulser (1) selon la revendication 5, **caractérisé en ce qu'**au moins un déviateur de flux (6, 6a) est placé à la sortie de la conduite de transport de flux (5).

7. Dispositif pour soulever, diriger et propulser (1) selon l'une ou plusieurs des revendications précédentes, **caractérisé en ce que** ledit moteur (4) est placé au moins partiellement à l'intérieur du tambour cylindrique creux (5).

8. Dispositif pour soulever, diriger et propulser (1) selon l'une ou plusieurs des revendications précédentes, **caractérisé en ce qu'**il comprend des moyens anti-turbulences (9) fixés à l'intérieur du tambour cylindrique creux (5) par des barres de soutien (10).

9. Dispositif pour soulever, diriger et propulser (1) selon l'une ou plusieurs des revendications précédentes, **caractérisé en ce qu'**il comprend des deuxièmes supports (7a) disposés pour relier lesdits déviateurs (6, 6a) au véhicule (2).
